# EUROPÄISCHE PATENTSCHRIFT

(11) **EP 1 252 347 B1**
(45) Veröffentlichungstag und Bekanntmachung des Hinweises auf die Patenterteilung: **27.08.2003**
(21) Anmeldenummer: 01901012.3
(22) Anmeldetag: 18.01.2001
(51) Int. Cl.: C22B 7/04, C21C 5/54, C21B 3/06, C22B 5/04, C04B 5/00

(54) **VERFAHREN ZUM ENTCHROMEN UND/ODER ENTNICKELN VON FLÜSSIGEN SCHLACKEN**
METHOD FOR REMOVING CHROME AND/OR NICKEL FROM LIQUID SLAGS
PROCEDE DE DECHROMAGE ET/OU DE DENICKELAGE DE LAITIERS LIQUIDES

(30) Priorität: 28.01.2000 AT 632000
(43) Veröffentlichungstag der Anmeldung: 30.10.2002
(73) Patentinhaber: Holcim Ltd., 8645 Jona (CH)
(72) Erfinder: EDLINGER, Alfred, A-6780 Bartholomäberg (AT)
(74) Vertreter: Haffner, Thomas M., Dr.
(86) Internationale Anmeldenummer: AT0100012
(87) Internationale Veröffentlichungsnummer: WO01055461

(56) Entgegenhaltungen:
- EP-B- 0 770 149
- WO-A-97/46717
- DE-A- 2 307 237
- FR-A- 2 121 603
- DATABASE WPI Section Ch, Week 197846 Derwent Publications Ltd., London, GB; Class M24, AN 1978-83163A XP002165647 & JP 53 117601 A (SUMITOMO METAL IND LTD), 14. Oktober 1978 (1978-10-14)

## Beschreibung

Die Erfindung bezieht sich auf ein Verfahren zum Entchromen und/oder Entnickeln von flüssigen Schlacken oder Schlackengemischen und Stäuben, bei welchem die flüssige Schlacke auf ein Metallbad, insbesondere Fe-Bad, aufgegeben und durch Einbringen von Kohlenstoff oder Kohlenstoffträgern reduziert wird.

Flüssige Stahlwerksschlacken aus der Edelstahl- oder Ferrochromherstellung enthalten je nach ihrer Herkunft und insbesondere je nach dem Anteil und der Zusammensetzung der bei der Stahlherstellung eingesetzten Schrottzusätze in erster Linie relativ hohe Chromoxidgehalte. Auch Manganoxide werden in relativ hoher Menge beobachtet. Bei bestimmten Stahlschlacken werden auch relativ hohe Nickel- und relativ hohe Vanadiumgehalte beobachtet. Im Falle von Stahlschlacken mit relativ hohen Vanadiumgehalten wurde in der EP 770 149 bereits vorgeschlagen nach einem ersten Reduktionsprozeß unter Einsatz von Kohlenstoffträgern in einem gesondert nachgeschalteten Reduktionskonverter Vanadium unter Verwendung von Reduktionsmitteln mit höherem Reduktionspotential rückzugewinnen. Zu diesem Zweck wurde zunächst das gesamte Chrom und Mangan carbothermisch reduziert, wofür die Schlacke über einem Metallbad, in welches Kohlenstoffträger, wie beispielsweise Methangas eingeleitet wurden, über einen längeren Zeitraum behandelt wurde. Ein nicht unerheblicher Anteil des Kohlenstoffeintrages wurde aufgrund der vorgeschlagenen relativ langen Behandlungsdauer zur Aufrechterhaltung der erforderlichen Temperaturen verbraucht.

Die Verwendung eines gesonderten und in der Regel auch gesondert zu beheizenden Reduktionsreaktors für die Abtrennung von Vanadium gestaltet sich naturgemäß nur dann wirtschaftlich; wenn Vanadium in entsprechend hoher Menge vorliegt, sodäß die Wirtschaftlichkeit aus dem Wert des rückgewonnenen Vanadiums resultiert. Wenn in erster Linie ein weitestgehendes Entchromen von Stahlschlacken bezweckt werden soll, ergeben sich bei der bekannten Verfahrensweise relativ lange Behandlungszeiten und dadurch relativ hohe thermische Verluste.

Die Erfindung zielt nun darauf ab, ein Verfahren der eingangs genannten Art dahingehend zu verbessern, daß auch dann, wenn wirtschaftliche Gutschriften durch Rückgewinnung von teuren metallischen Rohstoffen nicht erzielt werden können, eine sichere Entchromung unter gleichzeitiger Herabsetzung der gesamten Behandlungszeit erzielt werden kann. Zur Lösung dieser Aufgabe weist das erfindungsgemäße Verfahren die Merkmale gemäß Anspruch 1 auf. Der Kohlenstoffeintrag wird in das Metallbad bis zu einer Abnahme des Cr- und/oder Ni-Oxidgehaltes der Schlacke auf einen Wert zwischen 0,8 Gew.% und 0,2 Gew.% vorgenommen und bei Erreichen des vorgegebenen Cr-Oxidgehaltbereiches der Schlacke werden Reduktionsmittel mit höherem Reduktionspotential, wie z.B. A1, Ca, Si, Fe-Si oder Ca-Si, zur Absenkung des Cr- und/oder Ni-Oxidgehaltes auf unter 0,15 Gew.%, vorzugsweise unter 0,08 Gew.%, zugesetzt. Das erfindungsgemäße Verfahren wird somit unter Verwendung lediglich eines Konverters durchgeführt, wobei dadurch, daß die carbothermische Reduktion unter Einsatz von Kohlenstoffträgern, wie z.B. Kohlenwasserstoffen bereits zu einem Zeitpunkt abgebrochen wird, zu welchem die Schlacke noch einen relativ hohen und in der Regel inakzeptablen Chrom- oder Ni-Oxidgehalt aufweist, sodaß derartige Schlacken nicht unmittelbar als Zementzumahlstoffe eingesetzt werden können, die Behandlungszeit bis zu diesem Zeitpunkt wesentlich herabgesetzt wird und dadurch, daß bei Erreichen eines derartig vordefinierten relativ hohen Chrom- und/oder Ni-Oxidgehaltes nunmehr unmittelbar im gleichen Konverter Reduktionsmittel mit höherem Reduktionspotential zugesetzt werden, gelingt es, das Verfahren in relativ kurzer Zeit abzuschließen und den Chrom- und/oder Ni-Oxidgehalt sicher unter die vorgegebenen Grenzwerte zu führen. Mit einer derartigen stufenweisen Reduktion gelingt es naturgemäß auch andere Edelstahlbegleitelemente, wie z.B. Mo oder Vanadium, auf unkritische Werte in den Schlacken abzusenken.

Mit Vorteil wird im Rahmen des erfindungsgemäßen Verfahrens hiebei so vorgegangen, daß der Fe-Si-Zusatz in Mengen zwischen 3 und 15 kg/t Schlacke, vorzugsweise 6 bis 10 kg/t Schlacke, erfolgt. Sofern weitere mit derartigen Reduktionsmitteln reduzierbare Substanzen in der Schlacke enthalten waren, wie beispielsweise Vanadiumoxid, Manganoxid, Nickeloxid oder Molybdänoxid, werden diese naturgemäß in dieser Verfahrensstufe gleichzeitig in das Bad reduziert.

Die im Anschluß an die carbothermische Reduktion entstandene reduzierte Schlacke reagiert mit dem anschließend eingebrachten Reduktionsmittel relativ langsam, wobei die Geschwindigkeit der Reaktion und insbesondere die Reduktionskinetik dadurch wesentlich verbessert werden kann, wenn, wie es einer bevorzugten Weiterbildung des Verfahrens entspricht, das Bad nach der Zugabe der Reduktionsmittel mit höherem Reduktionspotential mit Inertgas gespült wird. Durch die Rührwirkung des eingebrachten Inertgases, welches beispielsweise Stickstoff oder Argon sein kann, wird die Reaktion wesentlich beschleunigt, sodaß mit überaus kurzen Behandlungszeiten zur Erzielung der gewünschten Chromoxidendgehalte das Auslangen gefunden werden kann.

Insgesamt wird in besonders vorteilhafter Weise so vorgegangen, daß die erste carbothermische Reduktion über einen Zeitraum von 15 bis 30 min. und die zweite Reduktion über einen Zeitraum von 3 bis 10 min. durchgeführt wird.

Die Erfindung wird nachfolgend anhand eines Ausführungsbeispieles näher erläutert.

### Ausführungsbeispiel

In einem Konverter wurden auf 10 t Roheisen 3 t einer Schlacke mit der nachfolgenden Richtanalyse im flüssigen Zustand chargiert:

| Stahlschlacke | |
|---|---|
| | Gew.% |
| CaO | 47,8 |
| SiO₂ | 26,3 |
| Al₂O₃ | 5,9 |
| MgO | 8,9 |
| TiO₂ | 1,3 |
| FeO | 1,7 |
| MnO | 1,4 |
| Cr₂O₃ | 6,7 |

Die Metalloxidgehalte wurden anschließend durch gleichzeitiges Einbringen von Kohle und Sauerstoff auf die nachfolgenden Gehalte abgesenkt:

| Metalloxidgehalte nach carbothermischer Reduktion | |
|---|---|
| | Gew.% |
| FeO | 1,1 |
| MnO | 0,8 |
| Cr₂O₃ | 0,3 |

Im Anschluß erfolgte die Zugabe von 30 kg Ferrosilizium und die Spülung des Bades mit 55 Nm³ Stickstoff über einen Zeitraum von 5 min. Die Reduktionswirkung des im Eisenbad gelösten Siliziums ergab folgende Schlackenendzusammensetzung:

| Schlacke nach starker Reduktion | |
|---|---|
| | Gew.% |
| CaO | 41,6 |
| SiO₂ | 35,1 |
| Al₂O₃ | 12,8 |
| MgO | 7,5 |
| TiO₂ | 1,1 |
| FeO | 0,8 |
| MnO | 0,4 |
| Cr₂O₃ | 0,07 |

Die gesamte zweistufige Reduktion konnte in einem Konverter durchgeführt werden, wobei ausgehend von einem Chromoxidgehalt von 6,7 Gew.% am Ende der carbothermischen Reaktion ein Chromoxidgehalt von 0,3 Gew.% nach einer Behandlungsdauer von 20 min. gefunden wurde. Bei der anschließenden silikothermischen Reduktion über einen Zeitraum von 5 min. gelang es den Chromoxidgehalt von 0,3 Gew.% auf 0,07 Gew.% abzusenken. Aufgrund der relativ kurzen Behandlungsdauer konnten die thermischen Verluste wesentlich herabgesetzt werden und der Einsatz an Kohlenstoffträgern in höherem Maße zur Reduktion genützt werden.

## Patentansprüche

1. Verfahren zum Entchromen und/oder Entnickeln von flüssigen Schlacken oder Schlackengemischen, bei welchem die flüssige Schlacke auf ein Metallbad, insbesondere Fe-Bad, aufgegeben und durch Einbringen von Kohlenstoff oder Kohlenstoffträgern reduziert wird, wobei die Reduktion zweistufig und in der zweiten Reduktionsstufe mit gegenüber der ersten Reduktionsstufe höherem Reduktionspotential vorgenommen wird, **dadurch gekennzeichnet, daß** der Kohlenstoffeintrag in das Metallbad bis zu einer Abnahme des Cr- und/oder Ni-Oxidgehaltes der Schlacke auf einen Wert zwischen 0,8 Gew.% und 0,2 Gew.% vorgenommen wird und daß bei Erreichen des vorgegebenen Cr-Oxidgehaltbereiches der Schlacke Reduktionsmittel mit höherem Reduktionspotential, wie z.B. Al, Ca, Si, Fe-Si oder Ca-Si, zur Absenkung des Cr- und/oder Ni-Oxidgehaltes auf unter 0,15 Gew.%, vorzugsweise unter 0,08 Gew.%, zugesetzt wird.

2. Verfahren nach Anspruch 1, **dadurch gekennzeichnet, daß** der Fe-Si-Zusatz in Mengen zwischen 3 und 15 kg/t Schlacke, vorzugsweise 6 bis 10 kg/t Schlacke, erfolgt.

3. Verfahren nach Anspruch 1 oder 2, **dadurch gekennzeichnet, daß** das Bad nach der Zugabe der Reduktionsmittel mit höherem Reduktionspotential mit Inertgas gespult wird.

4. Verfahren nach Anspruch 1, 2 oder 3, **dadurch gekennzeichnet, daß** die erste carbothermische Reduktion über einen Zeitraum von 15 bis 30 min. und die zweite Reduktion über einen Zeitraum von 3 bis 10 min. durchgeführt wird.

## Claims

1. A method for dechroming and/or denickelifying liquid slags or slag mixtures, in which the liquid slag is charged onto a metal bath, in particular an iron bath, and reduced by feeding carbon or carbon carriers, wherein the reduction is carried out in two steps, the second step with a higher reduction potential than the frist step, **characterized in that** the carbon feed into the metal bath is effected until a decrease of the Cr and/or Ni oxide contents of the slag to values of between 0.8 wt.-% and 0.2 wt.-% and that, upon attainment of the pregiven Cr oxide content range of the slag, reductants having higher reduction potentials such as, e.g., Al, Ca, Si, Fe-Si or Ca-Si are added in order to lower the Cr and/or Ni oxide contents to below 0.15 wt.-%, preferably below 0.08 wt.-%.

2. A method according to claim 1, **characterized in that** the addition of Fe-Si is effected in amounts ranging from 3 to 15 kg/ton slag, preferably 6 to 10 kg/ton slag.

3. A method according to claim 1 or 2, **characterized in that** the bath is flushed with an inert gas after the addition of the reductants having higher reduction potentials.

4. A method according to claim 1, 2 or 3, **characterized in that** the first carbothermal reduction is carried out over a period of 15 to 30 minutes and the second reduction is carried out over a period of 3 to 10 minutes.

## Revendications

1. Procédé pour le déchromage et/ou le dénickelage de laitiers liquides ou de mélange de laitiers, avec lequel le laitier liquide est appliqué sur un bain de métal, en particulier un bain de fer, et est réduit par l'introduction de carbone ou de supports de carbone, la réduction étant effectuée en deux étapes et lors de la seconde étape de réduction avec un potentiel de réduction supérieur par rapport à la première étape de réduction, **caractérisé en ce que** l'apport de carbone dans le bain de métal est effectué jusqu'à une réduction de la teneur en oxyde de chrome et/ou oxyde de nickel du laitier jusqu'à une valeur comprise entre 0,8 % de poids et 0,2 % de poids et **en ce que**, lorsqu'on atteint la plage définie de teneur en oxyde de chrome du laitier, on ajoute un agent de réduction avec un potentiel de réduction assez élevé, comme par exemple du Al, Ca, Si, Fe-Si ou Ca-Si, pour l'abaissement de la teneur en oxyde de chrome et/ou de nickel jusqu'à moins de 0,15 % en poids, de préférence au dessous de 0,08 % en poids.

2. Procédé selon la revendication 1, **caractérisé en ce que** l'addition de Fe et Si s'effectue dans des quantités comprises entre 3 et 15 kg / tonne de laitier, de préférence 6 jusqu'à 10 kg / tonne de laitier.

3. Procédé selon la revendication 1 ou 2, **caractérisé en ce que** le bain est lavé avec du gaz inerte après l'addition des agents de réduction présentant un potentiel de réduction assez élevé.

4. Procédé selon la revendication 1, 2 ou 3, **caractérisé en ce que** la première réduction carbothermique est effectuée pendant une période de 15 à 30 minutes et la seconde réduction pendant une période de 3 à 10 minutes.
